# EUROPÄISCHE PATENTSCHRIFT

(11) **EP 1 720 729 B1**
(45) Veröffentlichungstag und Bekanntmachung des Hinweises auf die Patenterteilung: **09.05.2007**
(21) Anmeldenummer: 05715503.8
(22) Anmeldetag: 24.02.2005
(51) Int. Cl.: B60N 2/235

(54) **BESCHLAG FÜR EINEN FAHRZEUGSITZ**
FITTING FOR A MOTOR VEHICLE SEAT
FERRURE POUR SIEGE DE VEHICULE AUTOMOBILE

(30) Priorität: 04.03.2004 DE 102004010491
(43) Veröffentlichungstag der Anmeldung: 15.11.2006
(73) Patentinhaber: KEIPER GmbH & Co. KG, 67657 Kaiserslautern (DE)
(72) Erfinder: ASSMANN, Uwe, 42857 Remscheid (DE); THIEL, Peter, 42899 Remscheid (DE)
(74) Vertreter: Patentanwälte Hosenthien-Held und Dr. Held
(86) Internationale Anmeldenummer: PCT/EP2005/001928
(87) Internationale Veröffentlichungsnummer: WO 2005/084996

(56) Entgegenhaltungen:
- DE-A1- 10 105 282
- DE-C1- 10 120 854

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der DE 101 05 282 A1 ist ein Beschlag dieser Art bekannt. Für eine ungehinderte Relativdrehung der beiden Beschlagteile ist zwischen diesen ein Spiel vorgesehen. Bei einem Einsatz des Beschlags als Neigungseinsteller für die Lehne eines Fahrzeugsitzes sorgt eine Lehnenkompensationsfeder, die zum teilweisen Ausgleich des Gewichts der Lehne vorgesehen ist, dafür, daß auch bei einer unbelasteten Lehne das Spiel nicht zu einer unerwünschten Geräuschbildung (Klappern) führt. Für andere Einsatzzwecke des Beschlags wäre es wünschenswert, wenn die Geräuschbildung auch ohne Lehnenkompensationsfeder unterdrückt werden könnte.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß zwischen dem Umklammerungsring und dem zweiten Beschlagteil ein Zwischenring angeordnet ist, kann das zum Betätigen notwendige Spiel so ausgeglichen werden, daß auch ohne Lehnenkompensationsfeder keine störenden Klappergeräusche entstehen. Um den Verschleiß gering zu halten, d.h. auf wenige ausgewählte Stellen zu beschränken, wird der Zwischenring vorzugsweise vom zweiten Beschlagteil oder vom Umklammerungsring drehfest mitgenommen. Dabei ist die Montage des Beschlags etwas einfacher und damit kostengünstiger, wenn das zweite Beschlagteil diese Aufgabe übernimmt und der Zwischenring auf dessen Außenseite sitzt.

Eine in Umfangsrichtung verlaufende Mantelfläche des Zwischenrings sorgt vorzugsweise sowohl für die Mitnahme durch das zweite Beschlagteil, indem sie für einen Formschluß mit wenigstens einer Aussparung versehen ist, welche einen radial vorspringenden Nocken des zweiten Beschlagteils aufnimmt, als auch für den radialen Spiel- und Toleranzausgleich, indem sie wenigstens eine Federnase aufweist, welche in radialer Richtung federnd am Umklammerungsring anliegt. Das zur Vermeidung eines Verklemmens des Beschlags notwendige Spiel steht dann trotzdem noch zur Verfügung. Der Zwischenring weist ferner vorzugsweise eine in axiale Richtung weisende Stirnfläche auf, mit welcher er vorzugsweise als axialer Gleiter wirkt, d.h. für eine geringe Reibung zwischen dem zweiten Beschlagteil und dem Umklammerungsring sorgt. Der Zwischenring kann aber in vereinfachter Weise so ausgebildet sein, daß er nur einen Teil dieser Aufgaben erfüllt, beispielsweise keine Federnasen vorhanden sind.

Im Unterschied zu beispielsweise der DE 101 20 854 C1 ist der erfindungsgemäße Zwischenring vorzugsweise außerhalb der Lagerstelle des zweiten Beschlagteils auf dem ersten Beschlagteil angeordnet, liegt also außerhalb des Kraftflusses. Diese Anordnung sorgt nicht nur für eine geringe Belastung und damit für einen geringen Verschleiß, sondern ermöglicht auch eine bevorzugte Herstellung des Zwischenrings aus Kunststoff, was die Herstellung kostengünstig macht und das Gewicht gering hält. Für Spezialanwendung kann der Zwischenring aber auch aus Metall bestehen. In anderer Ausführung kann der Zwischenring neben der Lagerstelle von zweitem Beschlagteil und erstem Beschlagteil angeordnet sein und zumindest im Crashfall außerhalb des Kraftflusses liegen.

Der erfindungsgemäße Beschlag ist vielseitig einsetzbar, beispielsweise zur Anlenkung der Lehne eines Fahrzeugsitzes, zur Neigungseinstellung einer Oberschenkelunterstützung oder zum sonstigen Klappen und Verriegeln eines Teiles des Fahrzeugsitzes. Dabei kann der Beschlag ein Rastbeschlag sein, wie beispielsweise in der DE 101 05 282 A1 beschrieben, oder als Getriebebeschlag ausgebildet sein, wie beispielsweise in der DE 101 20 854 C1 mit zwei Hohlrädern und einem zentralen Planetenrad beschrieben.

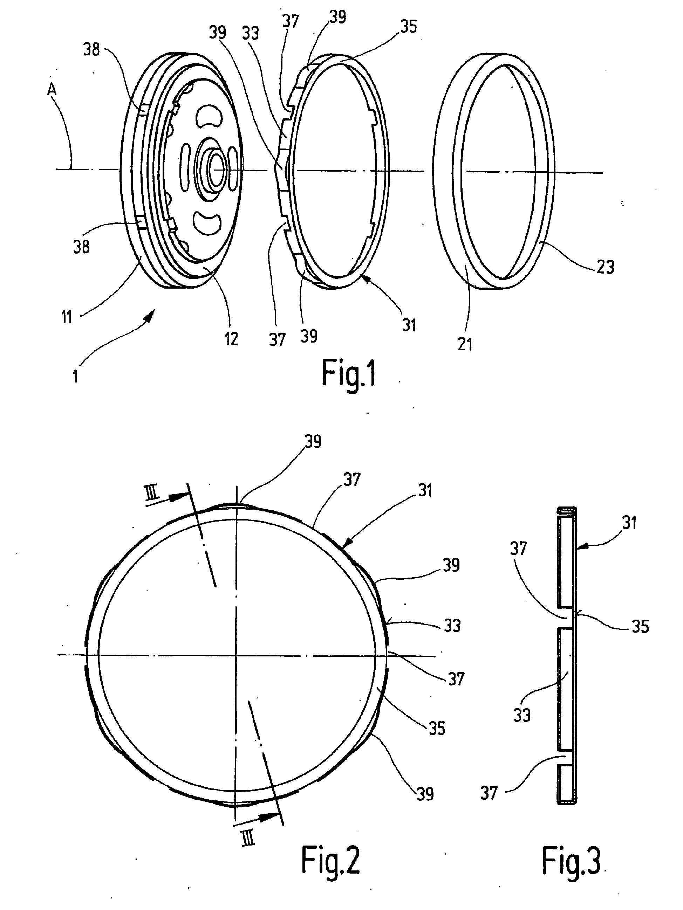

Im folgenden ist die Erfindung anhand zweier in der Zeichnung dargestellten Ausführungsbeispiele näher erläutert. Es zeigen
- Fig. 1: eine Explosionsdarstellung des teilweise zusammengebauten ersten Ausführungsbeispiels,
- Fig. 2: eine Ansicht des Zwischenrings in axialer Richtung,
- Fig. 3: einen Schnitt entlang der Linie III-III in Fig. 2,

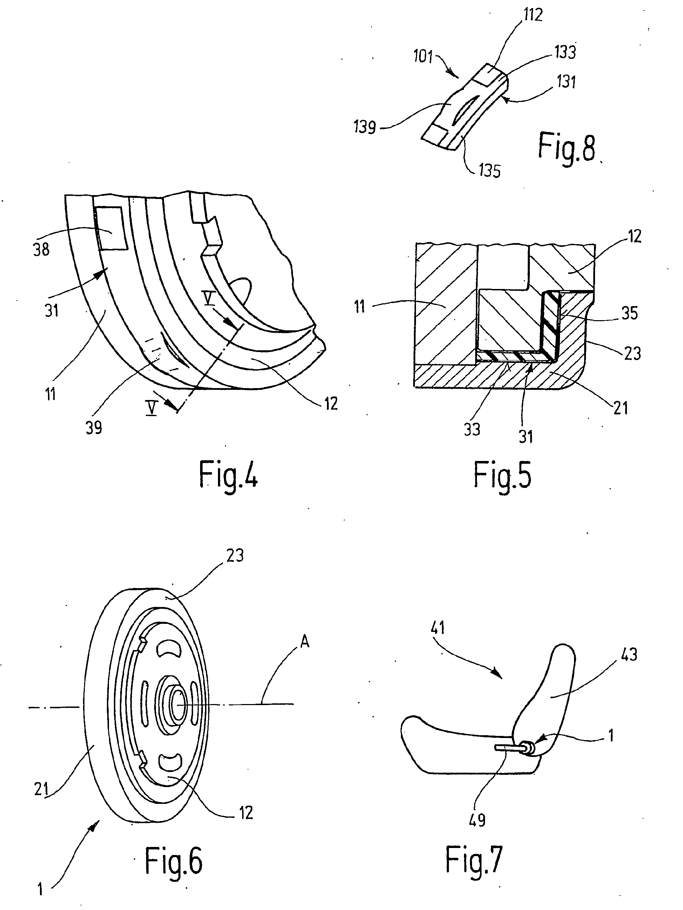

- Fig. 4: eine Teilansicht des Ausführungsbeispiels ohne Umklammerungsring,
- Fig. 5: einen Schnitt entlang der Linie V-V in Fig. 4,
- Fig. 6: eine perspektivische Ansicht des ersten Ausführungsbeispiels entsprechend Fig. 1,
- Fig. 7: einen mit dem beispielhaften Beschlag versehenen Fahrzeugsitz, und
- Fig. 8: eine Teilansicht eines zweiten Ausführungsbeispiels.

Im ersten Ausführungsbeispiel weist ein als Rastbeschlag ausgebildeter Beschlag 1 ein näherungsweise scheibenförmiges erstes Beschlagteil 11 und ein ebenfalls näherungsweise scheibenförmiges zweites Beschlagteil 12 auf, die relativ zueinander um eine zentrale Achse A drehbar sind. Die nachfolgenden Richtungsangaben beziehen sich auf das Zylinderkoordinatensystem, welches durch diese zentrale Achse A definiert ist.

Wie in der DE 101 05 282 A1 beschrieben, deren Offenbarungsgehalt ausdrücklich einbezogen wird, sind am ersten Beschlagteil 11 Führungs- und Lagersegmente ausgebildet, die einerseits auf ihrer äußeren Umfangsfläche das als Hohlrad mit einem Zahnkranz ausgebildete zweite Beschlagteil 12 lagern und andererseits zwischen sich wenigstens einen, vorliegend zwei radial bewegliche, gezahnte Riegel führen, welche mit dem Zahnkranz des zweiten Beschlagteils 12 zusammenwirken, um den Beschlag 1 zu verriegeln.

Ein Umklammerungsring 21 weist einerseits eine in Umfangsrichtung verlaufende Mantelfläche auf, mit welcher er auf der radial nach außen weisenden Umfangsfläche des ersten Beschlagteils 11 sitzt und mit diesem fest verbunden ist. Der Umklammerungsring 21 kann auch einstückig mit dem ersten Beschlagteil 11 ausgebildet sein. Andererseits weist der Umklammerungsring 21 auf seiner vom ersten Beschlagteil 11 abgewandten Stirnseite einen umgebördelten Rand 23 auf, welcher unter Bildung einer ringförmigen Stirnfläche das zweite Beschlagteil 12 übergreift und in axialer Richtung sichert. In radialer Richtung ist zwischen dem zweiten Beschlagteil 12 und dem Umklammerungsring 21 ein Spiel vorgesehen, um eine ungehinderte Drehbewegung des zweiten Beschlagteils 12 zu ermöglichen.

In dem Bereich zwischen dem zweiten Beschlagteil 12 und dem Umklammerungsring 21 ist ein auf dem zweiten Beschlagteil 12 sitzender Zwischenring 31 aus Kunststoff angeordnet, welcher entsprechend dem Umklammerungsring 21 eine Mantelfläche 33 und eine daran anschließende, ringförmige Stirnfläche 35 aufweist. Mit dieser quer zur axialen Richtung verlaufenden Stirnfläche 35 wirkt der Zwischenring 31 als axialer Gleiter zwischen dem zweiten Beschlagteil 12 und dem Umklammerungsring 21.

Die Mantelfläche 33 ist mit mehreren, gleichmäßig über den Umfang verteilten Aussparungen 37 versehen, welche radial vorspringende Nocken 38 des zweiten Beschlagteils 12 aufnehmen. Dies stellt eine drehfeste Mitnahme des Zwischenrings 31 durch das zweite Beschlagteil 12 sicher. Zwischen zwei Aussparungen 37 ist jeweils eine Federnase 39 ausgebildet, welche aus der Mantelfläche 33 in radialer Richtung ausgestellt sind und auf der Innenseite des Umklammerungsrings 21 federnd anliegen. Dadurch werden etwaige Toleranzen, beispielsweise Unrundheiten oder Exzentrizitäten der Beschlagteile 11 und 12 ausgeglichen, ohne daß deren Relativdrehung behindert wird. Außerdem wirken die Federnasen 39 dämpfend. Durch das Einfedern und da der Zwischenring 31 sich nicht an der Lagerstelle zwischen den Beschlagteilen 11 und 12 und somit außerhalb des Kraftflusses befindet, werden von ihm Lasten, beispielsweise im Crashfall, ferngehalten.

Der erfindungsgemäße Beschlag 1 kann bei einem Fahrzeugsitz 41 für ein Kraftfahrzeug verwendet werden, beispielsweise für die Neigungseinstellung, Tischklappung oder anderweitigen Anlenkung von dessen Lehne 43. Dabei sitzt in der Regel ein manuell betätigbarer Handhebel 49 auf einer mit der zentralen Achse A fluchtenden Übertragungsstange zwischen zwei erfindungsgemäßen Beschlägen 1 und sorgt für ein synchrones Entriegeln derselben.

Das zweite Ausführungsbeispiel betrifft einen Beschlag 101, welcher dem Beschlag 1 gleicht, soweit nicht abweichend beschrieben, weshalb gleiche und gleichwirkende Bauteile um 100 höhere Bezugszeichen tragen. Die Lagerstelle des zweiten Beschlagteils 112 auf dem ersten Beschlagteil ist hier aber in unmittelbarer Nähe des Umklammerungsringes. Der axial geringfügig zu dieser Lagerstelle versetzte Zwischenring 131 liegt mit der Rückseite seiner Stirnfläche 135 axial an dem zweiten Beschlagteil 112 an. Der Zwischenring 131 weist nunmehr seine Federnasen 139 an axial abstehenden Auslegern seiner Mantelfläche 133 auf, welche von Aussparungen in der als Lagerstelle dienenden Umfangsfläche des zweiten Beschlagteils 112 aufgenommen werden. Im Normalfall stehen die Federnasen 139 radial über diese Umfangsfläche über, um das Spiel auszugleichen, werden jedoch im Crashfall in die Aussparungen gedrückt, so daß dann die Federnasen 139 - und damit der gesamte Zwischenring 131- außerhalb des Kraftflusses liegen.

### Bezugszeichenliste

- 1, 101: Beschlag
- 11: erstes Beschlagteil
- 12, 112: zweites Beschlagteil
- 21: Umklammerungsring
- 23: Rand
- 31, 131: Zwischenring
- 33, 133: Mantelfläche
- 35, 135: Stirnfläche
- 37: Aussparung
- 38: Nocken
- 39, 139: Federnase
- 41: Fahrzeugsitz
- 43: Lehne
- 49: Handhebel
- A: zentrale Achse

## Patentansprüche

1. Beschlag für einen Fahrzeugsitz, insbesondere für einen Kraftfahrzeugsitz, mit einem ersten Beschlagteil (11), einem auf dem ersten Beschlagteil (11) gelagerten und relativ zu diesem um eine zentrale Achse (A) drehbaren zweiten Beschlagteil (12; 112), und einem Umklammerungsring (21), welcher mit dem ersten Beschlagteil (11) verbunden ist und das zweite Beschlagteil (12; 112) zum axialen Sichern übergreift, **dadurch gekennzeichnet, daß** zwischen dem Umklammerungsring (21) und dem zweiten Beschlagteil (12; 112) ein Zwischenring (31; 131) angeordnet ist.

2. Beschlag nach Anspruch 1, **dadurch gekennzeichnet, daß** das zweite Beschlagteil (12; 112) den Zwischenring (31; 131) drehfest mitnimmt.

3. Beschlag nach Anspruch 1 oder 2, **dadurch gekennzeichnet, daß** der Zwischenring (31; 131) eine in Umfangsrichtung verlaufende Mantelfläche (33; 133) aufweist.

4. Beschlag nach Anspruch 3, **dadurch gekennzeichnet, daß** die Mantelfläche (33; 133) mit wenigstens einer Aussparung (37) versehen ist, welche einen radial vorspringenden Nocken (38) des zweiten Beschlagteils (12) aufnimmt.

5. Beschlag nach Anspruch 3 oder 4, **dadurch gekennzeichnet, daß** die Mantelfläche (33; 133) wenigstens eine Federnase (39; 139) aufweist, welche in radialer Richtung federnd am Umklammerungsring (21) anliegt.

6. Beschlag nach einem der Ansprüche 1 bis 5, **dadurch gekennzeichnet, daß** der Zwischenring (31; 131) eine in axiale Richtung weisende Stirnfläche (35; 135) aufweist.

7. Beschlag nach Anspruch 6, **dadurch gekennzeichnet, daß** der Zwischenring (31; 131) mit seiner Stirnfläche (35; 135) als axialer Gleiter wirkt.

8. Beschlag nach einem der Ansprüche 1 bis 7, **dadurch gekennzeichnet, daß** der Zwischenring (31; 131) außerhalb der Lagerstelle des zweiten Beschlagteils (12; 112) auf dem ersten Beschlagteil (11) angeordnet ist und/oder zumindest im Crashfall außerhalb des Kraftflusses liegt.

9. Beschlag nach einem der Ansprüche 1 bis 8, **dadurch gekennzeichnet, daß** der Zwischenring (31; 131) aus Kunststoff besteht.

10. Fahrzeugsitz (41) mit einer Lehne (43), **gekennzeichnet durch** einen Beschlag (1; 101) nach einem der Ansprüche 1 bis 9 zur Anlenkung der Lehne (43).

## Claims

1. Fitting for a vehicle seat, especially for a motor vehicle seat, having a first fitting part (11), a second fitting part (12; 112) mounted on the first fitting part (11) and rotatable relative to the latter about a central axis (A), and a clasping ring (21), which is connected to the first fitting part (11) and engages over the second fitting part (12; 112) in order to secure it axially, **characterised in that** an intermediate ring (31; 131) is arranged between the clasping ring (21) and the second fitting part (12; 112).

2. Fitting according to Claim 1, **characterised in that** the second fitting part (12; 112) is drives the intermediate ring (31; 131) in a manner fixed against relative rotation.

3. Fitting according to Claim 1 or 2, **characterised in that** the intermediate ring (31; 131) has a lateral surface (33; 133) running in the circumferential direction.

4. Fitting according to Claim 3, **characterised in that** the lateral surface (33; 133) is provided with at least one recess (37) that receives a radially protruding lug (38) of the second fitting part (12).

5. Fitting according to Claim 3 or 4, **characterised in that** the lateral surface (33; 133) has at least one resilient projection (39; 139) that bears resiliently against the clasping ring (21) in the radial direction.

6. Fitting according to any one of Claims 1 to 5, **characterised in that** the intermediate ring (31; 131) has an end face (35; 135) oriented in the axial direction.

7. Fitting according to Claim 6, **characterised in that** the intermediate ring (31; 131) acts with its end face (35; 135) as an axial sliding element.

8. Fitting according to any one of Claims 1 to 7, **characterised in that** the intermediate ring (31; 131) is arranged outside the bearing point of the second fitting part (12; 112) on the first fitting part (11) and/or lies outside the force flow, at least in the event of a crash.

9. Fitting according to any one of Claims 1 to 8, **characterised in that** the intermediate ring (31; 131) is made of plastics material.

10. Vehicle seat (41) having a backrest (43), **characterised by** a fitting (1; 101) according to any one of Claims 1 to 9 for articulated connection of the backrest (43).

## Revendications

1. - Armature pour un siège de véhicule, en particulier pour un siège de véhicule automobile, avec une première partie d'armature (11), une deuxième partie d'armature (12 ; 112) montée sur la première partie d'armature (11) et tournant par rapport à celle-ci autour d'un axe central (A), et une bague de serrage (21), laquelle est liée avec la première partie d'armature (11), et enferme la seconde partie d'armature (12 ; 112) pour .le blocage axial, **caractérisée par le fait qu'**entre la bague de serrage (21) et la deuxième partie d'armature (12 ; 112) est disposée une bague intermédiaire (31 ; 131).

2. - Armature selon la revendication 1, **caractérisée par le fait que** la deuxième partie d'armature (12 ; 112) entraîne la bague intermédiaire (31 ; 131) de façon solidaire en rotation.

3. - Armature selon l'une des revendications 1 ou 2, **caractérisée par le fait que** la bague intermédiaire (31 ; 131) présente une surface d'enveloppe (33 ; 133) s'étendant dans la direction périphérique.

4. - Armature selon la revendication 3, **caractérisée par le fait que** la surface d'enveloppe (33 ; 133) est dotée d'au moins un évidement (37), lequel reçoit un bossage (38) faisant saillie radialement de la deuxième partie d'armature (12).

5. - Armature selon l'une des revendications 3 ou 4, **caractérisée par le fait que** la surface d'enveloppe (33 ; 133) présente au moins un talon à ressort (39 ; 139), lequel s'applique en direction radiale élastiquement sur la bague de serrage (21).

6. - Armature selon l'une des revendications 1 à 5, **caractérisée par le fait que** la bague intermédiaire (31 ; 131) présente une surface extérieure (35 ; 135) s'orientant en direction axiale.

7. - Armature selon la revendication 6, **caractérisée par le fait que** la bague intermédiaire (31 ; 131) agit avec sa surface extérieure (35 ; 135) comme élément de glissement axial.

8. - Armature selon l'une des revendications 1 à 7, **caractérisée par le fait que** la bague intermédiaire (31 ; 131) est disposée à l'extérieur du point d'appui de la deuxième partie d'armature (12 ; 112) sur la première partie d'armature (11) et/ou s'étend au moins en cas d'accident à l'extérieur du flux de force.

9. - Armature selon l'une des revendications 1 à 8, **caractérisée par le fait que** la bague intermédiaire (31 ; 131) se compose de matière plastique.

10. - Siège de véhicule (41) avec un dossier (43), **caractérisé par** une armature (1 ; 101) telle que définie à l'une des revendications 1 à 9 pour l'articulation du dossier (43).
